(19) **Europäisches Patentamt / European Patent Office / Office européen des brevets**

(11) **EP 4 545 599 A1**

(12) **EUROPEAN PATENT APPLICATION**

(43) Date of publication:
**30.04.2025  Bulletin 2025/18**

(21) Application number: **23206386.7**

(22) Date of filing: **27.10.2023**

(51) International Patent Classification (IPC):
***C08L 67/02*** *(2006.01)*

(52) Cooperative Patent Classification (CPC):
(C-Sets available)
**C08G 63/183; A45D 34/00; C08L 67/02**     (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GEKA GmbH**
**91572 Bechhofen (DE)**

(72) Inventor: **The designation of the inventor has not yet been filed**

(74) Representative: **Manitz Finsterwald**
**Patent- und Rechtsanwaltspartnerschaft mbB**
**Martin-Greif-Strasse 1**
**80336 München (DE)**

(54) **MELT-FORMED CONTAINER FOR RETAINING A WATER-BASED CONTENT, AND A METHOD FOR PRODUCING SAID MELT-FORMED COSMETIC CONTAINER**

(57)     The invention relates to a melt-formed cosmetic container for retaining a water-based content, said melt-formed cosmetic container for retaining a water-based content for use as a storage article of a water-based content, a method for producing such a melt-formed cosmetic container for retaining a water-based content, and a melt-formed cosmetic container for retaining a water-based content obtained from said method.

EP 4 545 599 A1

**(Cont. next page)**

(52) Cooperative Patent Classification (CPC): (Cont.)

C-Sets
**C08L 67/02, C08L 67/02**

**Description**

The invention relates to a melt-formed cosmetic container for retaining a water-based content, said melt-formed cosmetic container for retaining a water-based content for use as a storage article of a water-based content, a method for producing such a melt-formed cosmetic container for retaining a water-based content, and a melt-formed cosmetic container for retaining a water-based content obtained from said method.

In a society of increasing consumerism, the consumer is confronted with a significant amount of a variety of goods, such as cosmetic products. Considering the wide range of offered cosmetic products, it is not surprising that today's end user owns a plethora of different make-up articles, care products and/or hygiene products which were used only once or sporadically. This applies especially for make-up articles which are bought in abundance depending on the current season, trend or simply the consumer's current taste. Therefore, cosmetic products are found usually lying in homes for a long period of time and are only used now and then or not at all.

If a consumer should decide to use a forgotten cosmetic product, for whatever reason it may be, the product is typically no longer in an appealing state, i.e., in a condition of a newly purchased and firstly opened article. This also occurs when the consumer uses a favourite cosmetic product for a longer period of time and finds the state of the product deteriorated. In many cases, this deterioration of quality already occurs prior to the expiry date of the cosmetic product. Hence, a product which is intact and technically safe to use (e.g., free of bacteria and mould) deteriorates anyway.

The deteriorating factor is mainly due to the cosmetic products being prone to dry up in the packaging after a certain period of time, even long before reaching the expiry date - independent of whether the packaging was opened many times, once or not at all.

Today, cosmetic containers are mainly made from polymers, in particular polypropylene (PP), polyethylene (PE) including LLDPE, LDPE and HDPE, acrylonitrile styrene (AS/SAN), polyethylene terephthalate glycol-modified (PETG) or poly (ethylene terephthalate) (PET). Such polymer-based packaging loses the liquid main ingredient of the cosmetic product too early, as described above. This is in particular the case for when the liquid main ingredient is water. Also, the manufacturing of virgin polymers is associated with an increasing environmental pollution.

Glass continues to be a popular packaging material for cosmetic products. However, it is associated with certain disadvantages, such as being heavy and fragile. At least for these reasons, glass containers are not preferred to be carried in a handbag which is often required for cosmetic products.

Fluorinated materials, such as partially fluorinated or perfluorinated materials, have been used as packaging (*inter alia*, bottles and containers) as they are known for their water-repelling properties. However, fluorine-containing materials are getting an increasing attention due to the suspected health-risks of some of these chemicals. In particular, when using fluorinated compounds as packaging material for contents which are intended to come into contact with the human being (or other animals) as they are known to leach into said content.

In this context, there is a need for a cosmetic container which solves the aforementioned problems. In particular, there is a need for a lightweight and robust cosmetic container which is excellent in retaining a water-based content therein. In particular, there is a need for a cosmetic container which is excellent in retaining a water-based content therein. Also, there is a need for such a cosmetic container to be environmentally friendly. Also, there is a need for such a cosmetic container to be non-hazardous. There is also a need for such a cosmetic container to be safe for usage, i.e., associated with a reduced migration of nonintentional added substances (NIAS) into the container content.

This need is satisfied by the respective independent patent claims. In particular, this need is satisfied by a melt-formed cosmetic container for retaining a water-based content according to independent claim 1. Further, this need is satisfied by said melt-formed cosmetic container for use as a storage article of a water-based content according to independent claim 13. This need is further satisfied by a method of producing a melt-formed cosmetic container for retaining a water-based content according to independent claim 14. Further, this need is satisfied by a melt-formed cosmetic container for retaining a water-based content according to independent claim 15 obtained from said method. The dependent claims describe preferred embodiments of the invention.

According to an aspect of the invention, a melt-formed cosmetic container for retaining a water-based content is provided, wherein the container comprises a polymeric composition comprising a recycled polyethylene terephthalate) (rPET) having a micro-particle contamination lying in the range of from 1,500 to 63,000 particles per 10,000 images, PPTI.

In one embodiment, the cosmetic container disclosed herein contains a cosmetic product (i.e., cosmetic mass) as a content. As used herein, a "cosmetic mass" or "cosmetic product" contained in the cosmetic container is also referred to as "content" of said container.

The herein described "content" may be any suitable cosmetic product, i.e., cosmetic mass. The cosmetic product (i.e., cosmetic mass) may comprise a product for hairstyling (e.g., shampoo, hair conditioner, hair oil, hair gel, and/or hair cream), skin care (e.g., body oil, body cream, body lotion, face cream, face oil, face cleanser, eye serum, or lip balm), cosmetics (e.g., mascara, lipgloss, or eyeliner), or manicures/pedicures (e.g., nail polish, nail oil, or nail polish remover).

The cosmetic container may be any container applicable to contain a cosmetic product (i.e., cosmetic mass) as a content. Non-limiting examples of a cosmetic container comprise a bottle, a crucible, and/or a can.

As used herein, the term "water" preferably refers to purified water used in the cosmetic industry.

As used herein, the term "oil" refers to any oil used in the cosmetic industry. Non-limiting examples thereof are argan oil, olive oil, rose hips oil, coconut oil, canola oil, almond oil, castor oil, avocado oil, jojoba oil, tea tree oil, and the like.

As used herein, the term "organic solvent" refers to any organic solvent used in the cosmetic industry. Non-limiting examples thereof are alcohol (e.g., iso-propanol, ethanol, glycerine, 1,2-hexane diol, glycol, 2-methyl-1,3-propanediol, propylene glycol), ketone (e.g., acetone), ester (e.g., butyl acetate, ethyl acetate), and the like.

As used herein, the term "water-based content" refers to a content (i.e., cosmetic product) containing water in an amount of 40% by mass or more, based on the total mass of the water-based content.

As used herein, the term "oil-based content" refers to a content (i.e., cosmetic product) containing oil in an amount of 40 % by mass or more, based on the total mass of the oil-based content.

As used herein, the term "organic solvent-based content" refers to a content (i.e., cosmetic product) containing organic solvent in an amount of 40 % by mass or more, based on the total mass of the organic solvent-based content.

As used herein, the term "retain" refers to the ability of the cosmetic container to at least substantially, preferably substantially, maintain the original composition of a cosmetic product at the time of a first filling of a newly produced cosmetic container or at the time of a subsequent filing of a reused cosmetic container.

The term "recycled polyethylene terephthalate)" (rPET) is well-known to the skilled person. Any suitable recycled polyethylene terephthalate (rPET) may be used in the polymeric compositions of the present disclosure provided that it has a micro-particle contamination lying in the range of from 1,500 to 63,000 particles per 10,000 images, PPTI.

The term "PPTI" refers to "particles per 10,000 images" and is well-known to the skilled person. It is a parameter determined by means of an image analysis method, such as the particles in solution (partisol) measurement. The PPTI parameter defines the number of solid (insoluble) micro particles in a polymer, such as the microparticle contamination that is insoluble in a polymer, e.g., rPET. The higher the PPTI, the more solid (insoluble) microcontaminants are present in an analysed polymer.

In this connection it should be noted that a cosmetic container typically comprises a reservoir of the cosmetic, and an opening via which the cosmetic can be dispensed. The dispensing either takes place directly from the container via the opening, e.g. via a nozzle arranged at the container for dispensing e.g. a lotion such as a face cream, or indirectly via an applicator, such as a brush, that can be stored in the container to apply the cosmetic, e.g. an eye liner or the like.

According to a further aspect of the invention, the melt-formed cosmetic container for retaining a water-based content of the present disclosure for use as a storage article of a water-based content is provided.

According to a further aspect of the invention, a method for producing a melt-formed cosmetic container for retaining a water-based content of the present disclosure is provided, the method comprising the steps:

a. Providing recycled polyethylene terephthalate) (rPET) having a micro-particle contamination lying in the range of from 1,500 to 63,000 particles per 10,000 images, PPTI;

b. Optionally mixing the rPET with at least one further kind of polymer, thereby providing an rPET-based mixture; and

c. Melt-forming the rPET or rPET-based mixture, thereby providing the melt-formed cosmetic container for retaining a water-based content of the present disclosure.

According to a further aspect of the invention, a melt-formed cosmetic container for retaining a water-based content is provided, the cosmetic container being obtained from the method of the present disclosure.

In the following preferred embodiments of the present invention are described:

In one embodiment, the cosmetic container of the present disclosure further retains an organic solvent-based content and/or an oil-based content.

The content may be a water-based content, an oil-based content and/or an organic-solvent-based content. The content is at least a water-based content. That is, the herein described cosmetic container is at least capable of retaining a water-based content. The cosmetic container may further be capable of retaining an oil-based content. The cosmetic container may further be capable of retaining an organic solvent-based content. A water-based content, an oil-based content, and an organic solvent-based content defines that the main component of the content in the cosmetic container is made from water, oil and an organic solvent, respectively. Hence, the herein described cosmetic container may be reused for another purpose, i.e., a cosmetic container originally filled with an oil-based content may be reused as a cosmetic container filled with a water-based content thereafter. That way, manufacturing costs (e.g., production plant, energy, chemical resources/materials, manpower) may be reduced since a cosmetic container produced in a single batch may be used for different purposes, such as filling one cosmetic container from the batch with body oil (typically oil-based content) and another cosmetic container from the same batch with an eye serum (typically water-based content).

For example, a cosmetic container capable of retaining a water-based content and an oil-based content may be a single cosmetic container originally used to contain and retain a water-based content, and then be reused to contain and retain an oil-based content, and vice versa.

For example, a cosmetic container capable of retaining a water-based content and an organic solvent-based content may be a single cosmetic container originally used to contain and retain a water-based content, and then be reused to contain and retain an organic solvent-based content, and vice versa.

The cosmetic container containing and retaining a water-based content has water as the main phase of the content, and may further include an oil and/or an organic solvent which may be optionally retained. The herein described cosmetic container may also contain an oil-based content having oil as the main phase of the content and may further include water and/or an organic solvent. In this case, the cosmetic container at least retains the water, and may further retain the oil-based content and/or the organic solvent. The herein described cosmetic container may also contain and retain an organic solvent-based content having an organic solvent as the main phase of the content, and further including water and/or oil. In this case, the cosmetic container is not only capable of retaining the organic solvent-based content, but further of retaining at least the water included in the organic solvent-based content, optionally further retaining the oil in the organic solvent-based content.

For example, a face cleanser including a water-based content consisting of 80 % by mass of water (e.g., purified water), 15 % by mass of an organic solvent (e.g., ethanol), and 5 % by mass of an additive (e.g., natural extract, complexing agent, oil and/or parfum). In such a case, the cosmetic container is not only capable of retaining the water-based content, but may further retain at least one of the other ingredients being the organic solvent and the oil.

For example, a face oil including an oil-based content consisting of 70 % by mass of oil (e.g., rose hips oil), 25 % by mass of water (e.g., purified water), and 5 % by mass of an additive (e.g., emulsifying agent, natural extract, complexing agent, oil and/or parfum). In such a case, the cosmetic container at least retains the water in the oil-based content, and may further retain the oil-based content.

For example, a nail polish remover including an organic solvent-based content consisting of 80 % by mass of an organic solvent (e.g., ethanol), 10 % by mass of water (e.g., purified water), 5 % by mass of an oil (e.g., argan oil), and 5 % by mass of an additive (e.g., emulsifying agent, natural extract, complexing agent, oil and/or parfum). In such a case, the cosmetic container at least retains the water in the organic solvent-based content and may further retain the organic solvent-based content, and may further retain the oil included therein.

In one embodiment, the water-based content is a content containing water in an amount of 55 % by mass or more, of 60 % by mass or more, of 65 % by mass or more, of 70 % by mass or more, of 75 % by mass or more, of 80 % by mass or more, of 85 % by mass or more, of 90 % by mass or more, of 95 % by mass or more, of 98 % by mass or more, or of 99 % by mass or more, based on the total mass of the water-based content. For example, a face cleanser used as a water-based content may have a water content of 80 % by mass or more, based on the total mass of the face cleanser.

In one embodiment, the oil-based content is a content containing oil in an amount of 55 % by mass or more, of 60 % by mass or more, of 65 % by mass or more, of 70 % by mass or more, of 75 % by mass or more, of 80 % by mass or more, of 85 % by mass or more, of 90 % by mass or more, of 95 % by mass or more, of 98 % by mass or more, or of 99 % by mass or more, based on the total mass of the oil-based content. For example, a face oil used as an oil-based content may have an oil content of 99 % by mass or more, based on the total mass of the face oil.

In one embodiment, the organic solvent-based content is a content containing organic solvent in an amount of 55 % by mass or more, of 60 % by mass or more, of 65 % by mass or more, of 70 % by mass or more, of 75 % by mass or more, of 80 % by mass or more, of 85 % by mass or more, of 90 % by mass or more, of 95 % by mass or more, of 98 % by mass or more, or of 99 % by mass or more, based on the total mass of the organic solvent-based content. For example, a nail polish remover used as an organic solvent-based content may have an organic solvent content of 85% by mass or more, based on the total mass of the nail polish remover.

In one embodiment, the rPET is mechanically recycled or produced from chemically recycled monomers (produced by any known methods of depolymerization). In a preferred embodiment, the rPET is mechanically recycled. In one embodiment, the rPET is post-industrial recycled PET or a post-consumer recycled PET (PCR-rPET).

In a preferred embodiment, the rPET is post-consumer recycled PET (PCR-rPET). In a further preferred embodiment, the rPET is post-consumer recycled PET (PCR-rPET) from drink bottles, such as soft drink bottles.

In one embodiment, the herein described cosmetic container has a main body comprising the polymeric composition comprising a recycled polyethylene terephthalate) (rPET) having a micro-particle contamination lying in the range of from 1,500 to 63,000 particles per 10,000 images, PPTI. In other words, a lid (i.e., cap, cover) of the cosmetic container may not comprise the polymeric composition of the present disclosure.

As used herein, the term "main body" is the part of the cosmetic container which contains the water-based content. The main body may have a neck with a thread in order to attach it to a suitable screw cap. Needless to say, the main body has a bottom wall.

In one embodiment, the cosmetic container has the main body described above and further comprises a polymer sheet attached to the main body and arranged between the main body and the water-abased content and the surface of the main body. The polymer sheet preferably comprises, more preferably consists of virgin PET. The polymer sheet may be attached to the inner surface of the main body by any suitable means, e.g., by gluing. In one embodiment, the polymer sheet has a thickness being smaller than a wall thickness of the main body of the cosmetic container. In a preferred embodiment, the polymer sheet has a thickness being 70 % smaller than a wall thickness of the main body of the cosmetic container, more preferably being 80 % smaller, and even more preferably 90% smaller than a wall thickness of the main body of the cosmetic container. By attaching such a polymer sheet, the migration of nonintentional added substances (NIAS) from the rPET into the water-based content may be further reduced. By setting the thickness of the polymer sheet in the above-mentioned ranges, the ability of retaining a water-based content may not be reduced.

In one embodiment, the polymeric composition comprises an amount of recycled polyethylene terephthalate) (rPET) of 15 % by mass or more, based on the total mass of the polymeric composition, preferably of 30 % by mass or more, of 50 % by mass or more, of 70 % by mass or more, of 81 % by mass or more, of 85 % by mass or more, of 87 % by mass or more, of 90 % by mass or more, of 95 % by mass or more, or of 100 % by mass. By setting the amount of the rPET in the above-mentioned ranges, the ability of retaining a water-based content may be increase.

In one embodiment, the polymeric composition comprises an amount of recycled polyethylene terephthalate) (rPET) ranging from 15 % to 100 % by mass, based on the total mass of the polymeric composition, ranging from 30 % to 100 % by mass, ranging from 50 % to 100 % by mass, ranging from 70 % to 100 % by mass, ranging from 81 % to 100 % by mass, ranging from 85 % to 100 % by mass, ranging from 90 % to 100 % by mass, or ranging from 95 % to 100 % by mass. By setting the amount of the rPET in the above-mentioned ranges, the ability of retaining a water-based content may be increase.

In a preferred embodiment, the polymeric composition consists of recycled polyethylene terephthalate) (rPET).

In one embodiment, the polymeric composition further comprises at least one further kind of polymer, such as a polyester comprising PET and/or a copolyester. Non-limiting examples of a copolyester are PCTG, PCTA, PETG, and/or PCT.

As used herein, the terms "polyester" and "copolyester" are not used interchangeably.

The further kind of polymer is preferably a virgin polymer, more preferably virgin PET.

In one embodiment, the polymeric composition comprises rPET and a polyester comprising virgin PET. In a preferred embodiment, the polymeric composition consists of rPET and virgin PET.

In one embodiment, the polymeric composition comprises rPET and a virgin copolyester selected from the group consisting of virgin PCTG, virgin PCTA, virgin PETG, and/or virgin PCT.

Virgin Polyethylene terephthalate) (virgin PET) may be produced from ethylene glycol (EG) and dimethyl terephthalate (DMT), preferably from ethylene glycol and terephthalic acid (TPA).

The terms "PCTG", "PCTA", "PETG" and "PCT" are well-known to the skilled person, and may be produced according to procedures known in the art. PCTG may be made from terephthalic acid (TPA), 1,4-cyclohexanedimethanol (CHDM) and 1,3-propanediol (PDO). PCTA may be made from terephthalic acid (TPA), isophthalic acid (IPA) and 1,4-cyclohexanedimethanol (CHDM). PETG may be made from terephthalic acid (TPA), 1,4-cyclohexanedimethanol (CHDM) and ethylene glycol (EG). PCT may be made from terephthalic acid (TPA) and 1,4-cyclohexanedimethanol (CHDM).

In one embodiment, the polymeric composition comprises the at least one further kind of polymer in an amount of 85 % by mass or less, based on the total mass of the polymeric composition, preferably of 70 % by mass or less, of 50 % by mass or less, of 30 % by mass or less, of 19 % by mass or less, of 15 % by mass or less, of 13 % by mass or less, of 10 % by mass or less, of 5 % by mass or less, or of 0% by mass. By setting the amount of the further kind of polymer in the above-mentioned ranges, the ability of retaining a water-based content may be increased.

In one embodiment, the polymeric composition comprises the at least one further kind of polymer comprising polyester and/or copolyester ranging from 0 % to 85 % by mass, based on the total mass of the polymeric composition, ranging from 0 % to 70 % by mass, ranging from 0 % to 50 % by mass, ranging from 0 % to 30 % by mass, ranging from 0 % to 19 % by mass, ranging from 0 % to 15 % by mass, ranging from 0 % to 10 % by mass, or ranging from 0 % to 5 % by mass. By setting the amount of the further kind of polymer in the above-mentioned ranges, the ability of retaining a water-based content may be increased.

In one embodiment, the polymeric composition does not comprise a further kind of polymer selected from the group consisting of virgin polyester and/or virgin copolyester. Said virgin polyester and/or virgin copolyester being those defined above.

In one embodiment, the polymeric composition does not comprise a substantial amount of a fluorinated and/or perfluorinated compound. In a preferred embodiment, the polymeric composition does not comprise a substantial amount of a perfluorinated compound.

A substantial amount of a fluorinated and/or a perfluorinated compound means an amount of less than 1.00 % by mass, based on total mass of the polymeric composition. In a preferred embodiment, the polymeric composition comprises a fluorinated and/or a perfluorinated compound in an amount of less than 0.80 % by mass, based on total mass of the polymeric composition, more preferably of less than 0.70 % by mass, of less than 0.60 % by mass, even more preferably of less than 0.50 % by mass, of less than 0.40 % by mass, of less than 0.30 % by mass, of less than 0.20 % by mass, of less than 0.10 % by mass, of less than 0.05 % by mass, or of less than 0.01 % by mass. The amount of the fluorinated and/or perfluorinated compound mainly depends on a potential contamination originating from virgin PET which is used as the starting material for rPET. It may also be possible that during any step of the recycling process rPET may be unintentionally contaminated with a fluorinated and/or perfluorinated compound.

As used herein, the term "fluorinated compound" (i.e., partially fluorinated compound) refers to any compound containing at least one -C-F bond instead of a -C-H bond. The term "fluorinated compound" may further refer to a "fluorinated polymer" (i.e., partially fluorinated polymer) referring to any polymer containing at least one fluorine in its repeat unit.

As used herein, the term "perfluorinated compound" refers to any compound refers to any compound containing -C-F bonds instead of -C-H bonds. The term "perfluorinated compound" may further refer to a "perfluorinated polymer" referring to any polymer, wherein all -C-H bonds are substituted by -C-F bonds in its repeat unit.

In a preferred embodiment, the fluorinated and/or a perfluorinated compound is a polyfluoroalkyl substance (PFAS) selected from the group consisting of PFCA, PFSA, PFPA, PFECA, PFESA, FTCA, FTSA, FTOH, FASA, FASE, FASAA, and/or PFPE.

In a preferred embodiment, the fluorinated compound is a polyfluoroalkyl substance (PFAS), such as fluorotelomer carbon acids (FTCA), fluorotelomer sulfonic acid (FTSA), fluorotelomer alcohol (FTOH), perfluoroalkane sulfonic amide (FASA), and the like. Non-limiting examples of a fluorinated compound are poly(1,1,2,2-tetrafluorobutane-1,4-diyl) (ETFE), poly(1-fluoroethylene) (PVF), Poly(1,1-difluoroethylene) (PVDF), and the like.

In a preferred embodiment, the perfluorinated compound is a polyfluoroalkyl substance (PFAS), such as perfluorocarbon acid (PFCA), perfluoro sulfonic acid (PFSA), perfluoro phosphonic acid (PFPA), perfluoro alkylether carbon acid (PFECA), perfluoro alkylether sulfonic acid (PFESA), and the like. Non-limiting examples of a perfluorinated polymer are poly(1,1,2,2-tetrafluoroethylene) (PTFE), fluorinated ethylene propylene (FEP), perfluororpolyether (PFPE), perfluoroalkoxy alkanes (PFA), polychlorotrifluoroethylene (PCTFE), and the like.

In one embodiment, retaining at least a water-based content, and optionally further an oil-based content and/or an organic solvent-based content may be described by means of the following formula (1) as a weight loss of the main phase in said content being 10.00 % or less:

$$\left[1 - \frac{w(C)at\ t_{0+x}}{w(C)at\ t_0}\right] x\ 100 = Weight\ Loss\ (\%), \qquad \text{formula (1)}$$

wherein $w(C)at\ t_0$ is defined as a weight of a main phase of a content w(C) in the cosmetic container at a first point of time $t_0$,

$w(C)at\ t_{0+x}$ is defined as a weight of a main phase of content w(C) in the cosmetic container at a second point of time $t_{0+x}$ subsequent to $t_0$,

wherein the main phase of a water-based content is water, the main phase of an oil-based content is oil, and the main phase of an organic solvent-based content is an organic solvent, and

wherein the cosmetic container is sealed and stored at a temperature of about 45 °C and a pressure of about 1 atm for at least four (4) weeks ($t_{0+x}$).

In a preferred embodiment, the cosmetic container retains a water-based content according to the following formula (1.1) defined as a weight loss of water in a water-based content by 10.00 % or less:

$$\left[1 - \frac{w(WBC)at\ t_{0+x}}{w(WBC)at\ t_0}\right] x\ 100 = Weight\ Loss\ (\%), \qquad \text{formula (1.1)}$$

wherein $w(WBC)at\ t_0$ is defined as a weight of water of a water-based content w(WBC) in the cosmetic container at a first point of time $t_0$,

$w(WBC)at\ t_{0+x}$ is defined as a weight of water of a water-based content w(WBC) in the cosmetic container at a second point of time $t_{0+x}$ subsequent to $t_0$.

In a preferred embodiment, the cosmetic container may further retain an oil-based content according to the following formula (1.2) defined as a weight loss of oil in an oil-based content by 10.00 % or less:

$$\left[1 - \frac{w(OBC)at\ t_{0+x}}{w(OBC)at\ t_0}\right] x\ 100 = Weight\ Loss\ (\%), \qquad \text{formula (1.2)}$$

wherein $w(OBC)at\ t_0$ is defined as a weight of oil of an oil-based content w(OBC) in the cosmetic container at a first point of time $t_0$,

$w(OBC)at\ t_{0+x}$ is defined as a weight of oil of an oil-based content w(OBC) in the cosmetic container at a second point of time $t_{0+x}$ subsequent to $t_0$.

**EP 4 545 599 A1**

In a preferred embodiment, the cosmetic container may further retain an organic solvent-based content according to the following formula (1.3) defined as a weight loss of organic solvent in an organic solvent-based content by 10.00 % or less:

$$\left[1 - \frac{w(OSBC)\,at\ t_{0+x}}{w(OSBC)\,at\ t_0}\right] x\ 100 = Weight\ Loss\ (\%), \qquad \text{formula (1.3)}$$

wherein $w(OSBC)\,at\ t_0$ is defined as a weight of organic solvent of an organic solvent-based content w(OSBC) in the cosmetic container at a first point of time $t_0$, $w(OSBC)\,at\ t_{0+x}$ is defined as a weight of organic solvent of an organic solvent-based content w(OSBC) in the cosmetic container at a second point of time $t_{0+x}$ subsequent to $t_0$.

The formulae (1), (1.1), (1.2) and (1.3) defining a weight loss of 10.00 % or less apply under circumstances where the cosmetic container is sealed and stored at a temperature of 45 °C and a pressure of about 1 atm. This may be the case for a reversibly sealed cosmetic container, e.g. a container sealed by means of a screw cap. A weight loss of a main phase (e.g., water) of a content (e.g., water-based content) from an orifice of a cosmetic container is therefore negligible. This is consistent with a typical usage of a cosmetic container by a consumer, wherein the container is mostly sealed during its storage except for its actual use.

In one embodiment, wherein $t_{0+x}$ is four (4) weeks or more, preferably six (6) weeks or more, eight (8) weeks or more, or twelve (12) weeks or more.

In a preferred embodiment, the formulae (1), (1.1), (1.2) and (1.3) define a weight loss of 8.00 % or less, a weight loss of 6 % or less, preferably a weight loss of 5.00 % or less, even more preferably a weight loss of 4.00 % or less, of 3.50 % or less, of 3.30 % or less, of 3.20 % or less, of 3.15 % or less, of 3.10 % or less, of 3.05 % or less, of 3.00 % or less, of 2.80 % or less, of 2.60 % or less, of 2.55 % or less, of 2.50 % or less, of 2.30 % or less, of 2.10 % or less, of 2.00 % or less, of 1.80 % or less, of 1.60 % or less, of 1.50 % or less, of 1.30 % or less, of 1.20 % or less, or of 1.00 % or less.

In a preferred embodiment, the formulae (1), (1.1), (1.2) and (1.3) define a weight loss in a range of from 10.00 % or less and 1.00 % or more, of from 8.00 % or less and 1.20 % or more, of from 6.00 % or less and 1.30 % or more, of from 5.00 % or less and 1.50 % or more, of from 3.50 % or less and 1.60 % or more, or preferably of from 2.60 % or less and 1.70 % or more, of from 2.55 % or less and 1.75 % or more, of from 2.5 % or less and 1.80 % or more, of from 2.40 % or less and 1.90 % or more, or of from 2.2 % or less and 2.00 % or more.

In a preferred embodiment, formula (1.1) defines a weight loss of water in a water-based content of 5.00 % or less, of 3.15 % or less, of 3.10 % or less, of 3.05 % or less, of 2.50 % or less, of 2.00 % or less, of 1.80 % or less, or of 1.50 % or less.

In another preferred embodiment, formula (1.1) defines a weight loss of water in a water-based content in a range of from 5.00 % or less and 1.50 % or more, of from 3.50 % or less and 1.60 % or more, or preferably of from 2.60 % or less and 1.70 % or more, of from 2.55 % or less and 1.75 % or more, of from 2.5 % or less and 1.80 % or more, of from 2.40 % or less and 1.90 % or more, or of from 2.2 % or less and 2.00 % or more.

In a preferred embodiment, the micro-particle contamination of the recycled polyethylene terephthalate) (rPET) lies in the range of from 1,500 to 20,000 particles per 10,000 images, PPTI. In a more preferred embodiment, the micro-particle contamination of the recycled polyethylene terephthalate) (rPET) lies in the range of from 3,000 to 15,000 particles per 10,000 images, PPTI. In an even more preferred embodiment, the micro-particle contamination of the recycled poly(ethylene terephthalate) (rPET) lies in the range of from 5,000 to 12,000 particles per 10,000 images, PPTI.

In the above cases where the micro-particle contamination of the recycled poly(ethylene terephthalate) (rPET) lies in the range of from 1,500 to 20,000 particles, 3,000 to 15,000 particles and/or 5,000 to 12,000 particles per 10,000 images, PPTI, the rPET is obtained from a mono-collection system, i.e., the rPET is a post-consumer resin (PCR) obtained from a mono-collection system. As used herein, the term "mono-collection system" refers to a recycling system, wherein a post-consumer packaging polymer of a first kind (e.g., PET) is collected and recycled together with a further post-consumer packaging polymer of said first kind (e.g., PET). An rPET having a micro-particle contamination in one of the above-mentioned ranges can have improved mechanical properties, such as the stability, of the cosmetic container. Also, using rPET-PCR obtained from a mono-collection system can reduce the migration of nonintentional added substances (NIAS) from the rPET-PCR plastic into the water-based content.

In one embodiment, the micro-particle contamination of recycled polyethylene terephthalate) (rPET) lies in the range of from 1,500 to 63,000 particles per 10,000 images, PPTI, and/or of from 1,500 to 52,000 particles per 10,000 images, PPTI. In this case, the rPET is obtained from a co-collection system, i.e., the rPET is a post-consumer resin (PCR) obtained from a co-collection system. As used herein, the term "co-collection system" refers to a recycling system, wherein a post-consumer packaging polymer of a first kind (e.g., PET) is collected and recycled together with a further post-consumer packaging polymer of a second kind (e.g., PP).

In the present disclosure, rPET derived from a mono-collection system is preferred.

In one embodiment, the recycled polyethylene terephthalate) (rPET) comprises 50 to 95 % of micro-particles having a size of 3 $\mu$m or less, based on a total amount of micro-particles in the recycled polyethylene terephthalate) (rPET) preferably 60 to 90 %, and more preferably 70 to 85 %. If the amount of the micro-particles having a size of 3 $\mu$m or less is in the above-mentioned ranges, the water-retaining effect of the cosmetic container can be more easily achieved. The sizes of the micro-particles may be differentiated and determined by means of the PPTI measurement described herein.

In one embodiment, the recycled polyethylene terephthalate) (rPET) comprises 70 to 100 % of micro-particles having a size of 5 $\mu$m or less, based on a total amount of micro-particles in the recycled polyethylene terephthalate) (rPET) preferably 80 to 99 %, and more preferably 90 to 99 %. If the amount of the micro-particles having a size of 5 $\mu$m or less is in the above-mentioned ranges, the water-retaining effect of the cosmetic container can be more easily achieved. The sizes of the micro-particles may be differentiated and determined by means of the PPTI measurement described herein.

In one embodiment, the micro-particle contamination of the rPET comprises an inorganic compound, an additive, and/or a conjugated organic compound. In other words, the rPET having a micro-particle contamination lying in the range of from 1,500 to 63,000 particles per 10,000 images, PPTI is a rPET comprising an inorganic compound, an additive, and/or a conjugated organic compound as a micro-particle contaminant. The inorganic compound, the additive, the conjugated organic compound are described in the following.

In one embodiment, the recycled polyethylene terephthalate) (rPET) further comprises an inorganic compound.

In a preferred embodiment, the inorganic compound is present in an amount of 0.10 % by mass or more, based on the total mass of the recycled polyethylene terephthalate) (rPET), more preferably of 0.15 % by mass or more, of 0.20 % by mass or more, of 0.25 % by mass or more, of 0.30 % by mass or more, or 0.35 % by mass or more. The highest amount of inorganic compound is preferably 0.50 % by mass, based on the total mass of the recycled polyethylene terephthalate) (rPET), more preferably 0.40 % by mass. If the amount of the inorganic compound is in the above-mentioned ranges, the permeability of water, oil and/or organic solvent may be reduced so that the water-retaining effect of the cosmetic container can be more easily achieved. If the amount of the inorganic compound is higher than 0.50 % by mass, then this may increase the probability that the inorganic compound migrates into the water-based content of the cosmetic container.

In one embodiment, the inorganic compound is a compound based on an element selected from the group consisting of Al, Sb, Cr, Fe, Cd, Ti, Ni, Ca and/or Mg.

In one embodiment, the recycled polyethylene terephthalate) (rPET) further comprises an additive in an amount of 2.0 % by mass or less, based on the total mass of the recycled polyethylene terephthalate) (rPET) preferably in an amount of from 0.1 to 1 % by mass, 0.2 to 0.5 % by mass, or 0.25 to 0.3 % by mass. If the amount of the additive is lower than the above-mentioned range, then the water-retaining effect of the cosmetic container may be reduced. If the amount of the additive is higher than the above-mentioned range, then this may increase the probability that the additive migrates into the water-based content of the cosmetic container. Further, if the amount of the additive is higher than the above-mentioned range, then this may result in a less mechanical stability (e.g., brittleness) of the cosmetic container - without being bound by theory, this is believed to derive from (repetitive) heating of PET containing higher amounts of an additive during the recycling process.

In one embodiment, the additive is selected from the group consisting of polyvinyl chloride (PVC), polystyrene (PS), ethylene vinyl alcohol (EVOH), acrylonitrile butadiene styrene (ABS), polylactic acid (PLA) and/or polypropylene (PP). Such additives usually become contaminants in the rPET during the recycling process of PET, wherein such additives were incompletely removed during the sorting and recycling process steps.

In one embodiment, the recycled polyethylene terephthalate) (rPET) further comprises a conjugated organic compound in an amount of 500 ppm by mass or less, based on the total mass of the recycled polyethylene terephthalate) (rPET) preferably in an amount of from 2 to 250 ppm by mass, 3 to 100 ppm by mass, 5 to 100 ppm by mass, or 5 to 50 ppm by mass. If the amount of the conjugated organic compound is higher than the above-mentioned range, then this may increase the intensity of yellow color of the rPET.

In a preferred embodiment, the conjugated organic compound comprises quinone, benzoquinone, benzophenone, stilbene, and/or biphenyl. In another preferred embodiment, the conjugated organic compound is quinone, benzoquinone, benzophenone, stilbene, and/or biphenyl.

In one embodiment, the cosmetic container comprises a mascara container, a lipgloss container, an eyeliner container, or a pipette container, a hair gel container, a hair cream container, a lip balm container, an eye serum container, a body cream container, a body lotion container, a body oil container, a face cream container, or a face cleanser container.

In one embodiment, the cosmetic container is transparent. As used herein, the term "transparent" is defined as an absence of cloudiness, haziness, and/or muddiness, such that you can see through the material when inspected visually. In one embodiment, the term "transparent" is defined as having a low haze. In one embodiment, the term "transparent" is defined as having a haze value of 20% or less. In one embodiment, the term "transparent" is defined as having a haze value of 15% or less. In one embodiment, the term "transparent" is defined as having a haze value of 12% or less. In one embodiment, the term "transparent" is defined as having a haze value of 10% or less. In one embodiment, the term "transparent" is defined as having a haze value of 5% or less.

In a preferred embodiment, the cosmetic container is not transparent. As used herein, the term "not transparent" is defined as a presence of cloudiness, haziness, and/or muddiness, such that you cannot see through the material when inspected visually. In one embodiment, the term "not transparent" is defined as having a high haze. In one embodiment, the term "not transparent" is defined as having a haze value of 21 % or more. In one embodiment, the term "not transparent" is defined as having a haze value of 30% or more. In one embodiment, the term "not transparent" is defined as having a haze value of 50% or more. In one embodiment, the term "not transparent" is defined as having a haze value of 60% or more. In one embodiment, the term "not transparent" is defined as having a haze value of 80% or more. In one embodiment, the term "not transparent" is defined as having a haze value of 95% or more. Typically, the higher the rPET amount in the cosmetic container, the less transparent is said cosmetic container. Therefore, an increased non-transparency is associated with an increasing ability to retain a water-based content.

In one embodiment, the water-based content is an emulsion, such as an oil-in-water emulsion, wherein the water-based content preferably contains water in an amount of 40 % by mass or more and 80 % or less, based on the total mass of the water-based content. In this case, the water-based content does not only retain the water-based content but further stabilizes the emulsion. This is because the cosmetic container of the present disclosure is particularly useful for contents which require a sealed environment or otherwise become instable, in particular during storage. A non-limiting example of such an instable content is an emulsion (water-in-oil emulsion). Typically, an oil-in-water emulsion breaks down at a loss of 10 % by mass of water, based on the original total mass of the water in an oil-in-water emulsion. The herein described melt-formed cosmetic container can sufficiently retain the original water content, and therefore maintain the composition of said cosmetic product required for its intended use.

In one embodiment, the melt-formed cosmetic container for retaining a water-based content is further capable of retaining an oil-based content, wherein the oil-based content is an emulsion. For example, the emulsion is a water-in-oil emulsion, wherein the oil-based content preferably contains oil in an amount of 50 % by mass or more and 80 % or less, based on the total mass of the oil-based content. In this case, the water-based content does not only retain the water-based content but further stabilizes the emulsion, as described above for the water-based content. Similarly, a water-in-oil emulsion breaks down at a loss of 10 % by mass of oil, based on the original total mass of the oil in a water-in-oil emulsion. The herein described melt-formed cosmetic container can sufficiently retain the original oil content of a cosmetic product, and therefore maintain the composition of said cosmetic product required for its intended use.

In one embodiment, the melt-formed cosmetic container disclosed herein contains a cosmetic mass.

In one embodiment, the melt-formed cosmetic container for retaining a water-based content of the present disclosure is a water-repellent melt-formed cosmetic container. In this case, all of the (preferred) embodiment and features described above or in the claims for the melt-formed cosmetic container for retaining a water-based content itself apply *mutatis mutandis* to the water-repellent melt-formed cosmetic container.

Herein, all of the (preferred) embodiments and features described above or in the claims for the melt-formed cosmetic container for retaining a water-based content itself apply *mutatis mutandis* to the method of producing a melt-formed cosmetic container for retaining a water-based content.

In one embodiment, a method for producing a melt-formed cosmetic container for retaining a water-based content is provided, the method comprising the steps:

   a. Providing recycled polyethylene terephthalate) (rPET) having a micro-particle contamination lying in the range of from 1,500 to 63,000 particles per 10,000 images, PPTI; and
   c. Melt-forming the rPET, thereby providing the melt-formed cosmetic container for retaining a water-based content.

In one embodiment, a method for producing a melt-formed cosmetic container for retaining a water-based content is provided, the method comprising the steps:

   a. Providing recycled polyethylene terephthalate) (rPET) having a micro-particle contamination lying in the range of from 1,500 to 63,000 particles per 10,000 images, PPTI;
   b. Mixing the rPET with at least one further kind of polymer, thereby providing an rPET-based mixture; and
   c. Melt-forming the rPET-based mixture, thereby providing the melt-formed cosmetic container for retaining a water-based content.

The melt-forming comprises the methods injection molding, extrusion molding, injection blow molding, injection stretch blow molding, and extrusion blow molding. These processes are known to the skilled person.

Examples of melt-formed cosmetic container of the present disclosure comprises an injection molded cosmetic container, an extrusion molded cosmetic container, an injection blow molded cosmetic container, an injection stretch blow molded cosmetic container and and extrusion blow molded cosmetic container.

In a preferred embodiment, the melt-formed cosmetic container of the present disclosure is an injection blow molded cosmetic container.

In a preferred embodiment, the method of melt-forming is injection blow molding.

In one embodiment, the injection blow molding manufacturing process involves the following steps:

1) melting the rPET or rPET-based mixture in a reciprocating screw extruder obtained in step a. or step b. of the herein described method for producing a melt-formed cosmetic container, thereby providing a molten rPET or a molten rPET-based mixture;

2) injecting the molten rPET or the molten rPET-based mixture into an injection mold to form a partially cooled tube closed at one end (i.e., a preform);

3) moving the preform into a blow mold having the desired finished shape around the preform and closing the blow mold around the preform;

4) blowing air into the preform, causing the preform to stretch and expand to fill the mold;

5) cooling the molded cosmetic container; and

6) ejecting the cosmetic container from the mold.

In one embodiment, the rPET comprises a PET dimer in a total amount of from about 50 to about 130 mg/kg, preferably about 75 to about 125 mg/kg, more preferably about 100 to about 120 mg/kg. A PET dimer amount in the above-mentioned range is associated with a reduced permeability of at least water through the cosmetic container, and therefore has an advantageous effect on retaining water of a water-based content.

The PET dimer is a non-volatile component and one of the most predominant PET oligomers found in rPET. The PET dimer may be any suitable dimer, such as a dimer having the formulae $P_2E_2$ having a molecular weight of 384.3 g/mol, $TP_2E_1D_1$ having a molecular weight of 428.4 g/mol, and/or $TP_2D_2$ having a molecular weight of 472.5 g/mol, wherein P is terephthalic acid or isophthalic acid, E is ethylene glycol, TP is terephthalic acid, and D is diethylene glycol.

In a preferred embodiment, the rPET comprises a PET dimer in a total amount of from about 50 to about 130 mg/kg, preferably about 75 to about 125 mg/kg, more preferably about 100 to about 120 mg/kg, wherein the PET dimer is selected from the group consisting of formulae $P_2E_2$ having a molecular weight of 384.3 g/mol, $TP_2E_1D_1$ having a molecular weight of 428.4 g/mol, and/or $TP_2D_2$ having a molecular weight of 472.5 g/mol.

In one embodiment, the rPET comprises a PET trimer in a total amount of from about 1,000 to about 5,000 mg/kg, preferably about 2,000 to about 4,500 mg/kg, more preferably about 3,000 to about 4,000 mg/kg. A PET trimer amount in the above-mentioned range is associated with a reduced permeability of at least water through the cosmetic container, and therefore has an advantageous effect on retaining water of a water-based content.

The PET trimer is a non-volatile component and one of the most predominant PET oligomers found in rPET. The PET trimer may be a trimer having the formula $TP_3E_3$ having a molecular weight of 576.5 g/mol, wherein P is terephthalic acid or isophthalic acid, E is ethylene glycol, and TP is terephthalic acid.

The following Examples further illustrate the present invention:

MATERIALS AND METHODS:

Materials

*a) Production of Cosmetic Container*

As a recycled PET for producing a polymeric composition, rPET was supplied in the form of greyish flakes by Morssinkhof-Rymoplast. Said rPET originated from post-consumer PET-A beverage bottle scraps from the EU. Said PET-A scraps were subjected to a recycling process comprising the steps of extrusion with high vacuum degassing, melt filtration and solid state polycondensation (SSP). Rheological and other properties of the used rPET flakes are shown in the following Table:

| Rheology | Value | Unity | Test std. |
|---|---|---|---|
| Viscosity (IV) | 0.82 - 0.87 | dl/g | ASTM D1238 / ISO 1133) |
| Other properties | Value | Unity | Test std. |
| Bulk Density | 0.90± 0.50 | kg/dm³ | Internal |
| Melt filtration | 40 | Micron | - |
| Humidity | < 0.1 | % | Internal |
| Pelletsize (M50) | 1 ± 0.2 | g | Internal |
| Black spots (0,5 - 1,0 mm) | < 10 | % | Internal / DVS AM356 |
| Black spots (1,0 - 2,0 mm) | < 3 | % | Internal / DVS AM356 |
| Black spots (> 2,0 mm) | 0 | % | Internal / DVS AM356 |
| Acetaldehyde | < 1.0 | ppm on chip | ASTM 2013 |
| Dust | < 0.03 | % | - |
| Colour margins Crystallised | (63) - (78) | L | CieLAB |
| | (-5) - (-1.5) | a | |
| | (-3.5) - (1) | b | |

As a virgin PET for producing a polymeric composition, Polyclear® T-94 was purchased in the form of pellets from Indorama.

*b) Purchased Cosmetic Container*

A cosmetic container was obtained in the form of a bottle, the bottle comprising a polymeric composition comprising rPET having a micro-particle contamination lying in the range of from 1,500 to 20,000 particles per 10,000 images, PPTI. Three (3) different types of bottles from the ECOTRIA® series manufactured by SK Chemicals were used:

**Table 1:** Polymeric Compositions of purchased Cosmetic Containers [1]

| No. of cosmetic container | Amount of rPET[2] | Copolyester |
|---|---|---|
| 1[3] | 30 % by mass | 70 % by mass |
| 2[4] | 50 % by mass | 50 % by mass |
| 3[5] | 70 % by mass | 30 % by mass |
| [1] Amount of rPET by mass % or copolyester by mass %, based on the total mass of the polymeric composition consisting of rPET and copolyester. [2] rPET having a micro-contamination lying in the range of from 1,500 to 20,000 particles per 10,000 images (PPTI). [3] trade name: Ecotria R100. [4] trade name: Ecotria R101. [5] Trade name: Ecotria R102. | | |

As a water-based content, the materials in Table 2 were used.

Table 2: Water-based Contents

| | Water content[1] |
|---|---|
| K2-1.546.1 | about 50.2 % |
| AME07701B | about 47.5 % |
| AME18201B | about 40.2 % |
| [1] Amount of water by mass %, based on the total mass of the water-based content. The term "about" refers to a measurement inaccuracy of ± 0.5 %. | |

Measurement methods

*a) PPTI measurement*

The PPTI was measured as described in [1]. In detail, a herein described cosmetic container was cut into small pieces of around $1 \times 1$ cm. These square pieces were washed with 0.2 $\mu$m, and then filtered with ethanol to remove external dirt. Then, they were blown dry and dissolved in hexafluoro-iso-propanol (HFIP) at a concentration of 10 g/100 mL. This solution was pumped through a cuvette, thereby taking and analysing 10 000 images. Counted particles were classified in five (5) groups according to their size in $\mu$m: 0 to 3, >3 to 5, >5 to 10, >10 to 25, and >25 to 100. Also, specific types such as transparent particles, thread like types and gel like types were identified separately and classified by size. A sensitivity value of 45 was used as pixel threshold for all measurements in the cosmetic container. Herein, the total amount of measured particles per 10,000 images (PPTI) was reported as a single measurement with no standard deviations available.

*b) Weight loss measurement*

A series of cosmetic containers as purchased or as produced (see above) were cleansed with compressed air, water and then acetone, thereafter being air-dried. The cleansed and dried cosmetic container were weighed in an empty state. Then, each one of these were filled with about the same amount of a water-based content (K2-1.546.1, AME07701B or AME18201B), weighed in a filled stated, sealed with a screw cap in a leak-proof manner, and then put into an incubator set to a temperature of 45 °C at a pressure of 1 atm. After a certain period of time (at least four weeks), the containers were taken out of the incubator, were let to rest for about 5 min at room temperature, were freed from the screw caps, and then weighed again in an incubated state. Each weighing test was performed seven (7) times, and an arithmetic mean value was determined from these.

PRODUCTION OF COSMETIC CONTAINER

As polymeric composition, virgin PET, rPET and rPET-based mixture was used, respectively. The materials were pre-dried at 160 °C for 6 hours before filling into the injection blow molding machine. In the case of virgin PET or rPET, the respective polymer was used as purchased from the manufacturer and filled into the injection blow molding machine. In the case of rPET-based mixture, rPET as purchased was mixed in a defined weight ratio with a further kind of polymer (e.g., virgin PET) in a receptacle under stirring for about 5 min. The defined weight ratios are listed in Table 3 below. The mixed polymeric rPET-based mixture was then filled into the injection blow molding machine. The total mass of the polymeric composition filled into the injection blow molding machine was chosen as required by the dimensions of the final cosmetic container.

**Table 3:** Polymeric compositions of the produced cosmetic containers[1]

| No. of cosmetic container | rPET[2] | Virgin PET |
|---|---|---|
| 4 | - | 100 % by mass |
| 5 | 50 % by mass | 50 % by mass |
| 6 | 100 % by mass | - |

[1] Amount of rPET by mass % or virgin PET by mass %, based on the total mass of the polymeric composition consisting of rPET and virgin PET. [2] having a micro-contamination of 9,532 particles per 10,000 images (PPTI).

Melt-forming of a cosmetic container was performed using an injection blow molding machine NOVAPAX NSB 650 at 90 bar injection pressure and 50 bar holding pressure with an average cycle time of 13,5 seconds and 8 cavity hot runner molds. The injection barrel had six (6) temperature zones, in sequence from barrel to mold: 40°C at the hopper, 290 °C, 290 °C, 290 °C, 290 °C and 290 °C at the barrel, and 290 °C at the nozzle. The injection mold hot runner was heated via 10 heating zones (1x sprue, 1x manifold and 12x nozzles) at 300 °C (nozzles) and 290 °C at sprue and manifold each. The injection mold was cooled with cold water (15 °C) on at bottle bottom body and threads with 40%, 40% and 10% of flow corresponding. The blow mold was cooled with 15°C cold water. Average bottle weight was 6g, shot weight avg. 48g. All bottles were produced under identical conditions. Preforms were transported into the blow mold from the injection mold while still in a thermoplastic temperature range via the machines turn table. Bottles were blown from the preforms at 25 bar. Blow time consisted of 2 stages with a total of 7 seconds.

COMPARATIVE EXAMPLES AND EXAMPLES

Comparative Example 1

A cosmetic container comprising 100 % by mass of virgin PET was produced as described under item "Production of Cosmetic Container" above (see Cosmetic Container No. 4 in Table 3).

Examples 1 and 2

A cosmetic container comprising the polymeric composition No. 5 (**Example 1**) and No. 6 (**Example 2**) in Table 3, respectively was produced as described under item "Production of Cosmetic Container" above.

Examples 3 to 5, and Comparative Example 2: Weight Loss Results

The purchased cosmetic containers 1, 2 and 3 of Table 1, the produced cosmetic containers of Examples 1 and 2, and the produced cosmetic container of Comparative Example 1 were used for water weight loss measurements as described above. The results are summarized in Tables 4 and 5 below.

**Table 4:** Results of water-retaining properties of cosmetic containers

|  | No. of cosmetic container | Water-based content | Weight loss (%)[1] |
|---|---|---|---|
| Comparative Example 2 |  | K2-1.546.1 | 3.45 |
| Comparative Example 3 | 4 | AME07701B | 3.13 |
| Comparative Example 4 |  | AME18201B | 3.15 |
| Example 3 |  | K2-1.546.1 | 3.03 |
| Example 4 | 5 | AME07701B | 3.00 |
| Example 5 |  | AME18201B | 2.91 |
| Example 6 | 6 | AME07701B | 1.75[2] |
| Example 7 | 6 | AME07701B | 2.55[3] |
| [1] Determined after 6 weeks. [2] Determined after 4 weeks. [3] Determined after 6 weeks. | | | |

**Table 5:** Results of water-retaining properties of cosmetic containers

|  | No. of cosmetic container | Water-based content | Weight loss (%)[1] |
|---|---|---|---|
| Example 8 |  | K2-1.546.1 | 1.52 |
| Example 9 | 1 | AME07701B | 1.57 |
| Example 10 |  | AME18201B | 1.42 |
| Example 11 |  | K2-1.546.1 | 2.10 |
| Example 12 | 2 | AME07701B | 1.99 |
| Example 13 |  | AME18201B | 1.88 |
| Example 14 |  | K2-1.546.1 | 1.97 |
| Example 15 | 3 | AME07701B | 1.92 |
| Example 16 |  | AME18201B | 1.95 |
| [1] Determined after 6 weeks. | | | |

From the results in Tables 4 and 5, it can be found that the cosmetic container of the present disclosure melt-formed cosmetic container for retaining a water-based content, the container comprising a polymeric composition comprising a recycled polyethylene terephthalate) (rPET) having a micro-particle contamination lying in the range of from 1,500 to 63,000 particles per 10,000 images, PPTI, retains various water-based contents comprising different amounts of water.

The following summarizes embodiments of the present invention and preferred aspects thereof, it is to be understood that these embodiments and preferred aspects are disclosed in combination with any of the claims and further features described herein:
Embodiments:

1. A melt-formed cosmetic container for retaining a water-based content, the container comprising:
a polymeric composition comprising a recycled polyethylene terephthalate) (rPET) having a micro-particle contamination lying in the range of from 1,500 to 63,000 particles per 10,000 images, PPTI.

2. The melt-formed cosmetic container of embodiment 1 for further retaining an organic solvent-based content and/or an oil-based content.

3. The melt-formed cosmetic container of embodiment 1 or 2, wherein the polymeric composition comprises an amount of recycled polyethylene terephthalate) (rPET) of 15 % by mass or more, based on the total mass of the polymeric composition, preferably of 30 % by mass or more, of 50 % by mass or more, of 70 % by mass or more, of 85 % by mass or more, or of 100 % by mass.

4. The melt-formed cosmetic container of any one of embodiments 1 to 3, wherein the polymeric composition further comprises at least one further kind of polymer, such as a polyester comprising PET and/or a copolyester comprising PCTG, PCTA, PETG, and/or PCT.

5. The melt-formed cosmetic container of embodiment 4, wherein the polymeric composition comprises the at least one further kind of polymer in an amount of 85 % by mass or less, based on the total mass of the polymeric composition, preferably of 70 % by mass or less, of 50 % by mass or less, of 30 % by mass or less, of 15 % by mass or less, or of 0% by mass.

6. The melt-formed cosmetic container of any one of embodiments 1 to 5, wherein the polymeric composition does not comprise a substantial amount of a fluorinated and/or perfluorinated polymer.

7. The melt-formed cosmetic container of any one of embodiments 1 to 6, wherein at a temperature of about 45 °C and a pressure of about 1 atm, when

$w(WBC)$ at $t_0$ is defined as a weight of water of the water-based content
$w(WBC)$ in the cosmetic container at a first point of time $t_0$, and
$w(WBC)$ at $t_{0+x}$ is defined as a weight of water of the water-based content
$w(WBC)$ in the cosmetic container at a second point of time $t_{0+x}$ subsequent to $t_0$,
a weight loss of the water-based content according to formula (1.1) is 5.00 % or less, said formula (1.1) being

$$\left[1 - \frac{w(WBC) \, at \, t_{0+x}}{w(WBC) \, at \, t_0}\right] x \, 100 = Weight \, loss \, (\%).$$

8. The melt-formed cosmetic container of embodiments 7, wherein the formula (1) is 3.15 % or less, 3.10 % or less, 3.05 % or less, 2.50 % or less, 2.00 % or less, 1.80 % or less, or 1.50 % or less.

9. The melt-formed cosmetic container of embodiment 7 or 8, wherein $t_{0+x}$ is four (4) weeks or more, preferably six (6) weeks or more.

10. The melt-formed cosmetic container of any one of embodiments 1 to 9, wherein the micro-particle contamination of recycled polyethylene terephthalate) (rPET) lies in the range of from 1,500 to 20,000 particles per 10,000 images, PPTI, preferably of from 3,000 to 15,000 particles per 10,000 images, PPTI, and more preferably of from 5,000 to 12,000 particles per 10,000 images, PPTI.

11. The melt-formed cosmetic container of any one of embodiments 1 to 10, wherein the micro-particle contamination of recycled polyethylene terephthalate) (rPET) lies in the range of from 1,500 to 63,000 particles per 10,000 images, PPTI, and/or of from 1,500 to 52,000 particles per 10,000 images, PPTI.

12. The melt-formed cosmetic container of any one of embodiments 1 to 11, wherein the recycled polyethylene terephthalate) (rPET) comprises 50 to 95 % of micro-particles having a size of 3 $\mu$m or less, based on a total amount of micro-particles in the recycled polyethylene terephthalate) (rPET) preferably 60 to 90 %, and more preferably 70 to 85 %.

13. The melt-formed cosmetic container of any one of embodiments 1 to 12, wherein the recycled poly(ethylene terephthalate) (rPET) comprises 70 to 100 % of micro-particles having a size of 5 $\mu$m or less, based on a total amount of micro-particles in the recycled polyethylene terephthalate) (rPET) preferably 80 to 99 %, and more preferably 90 to 99 %.

14. The melt-formed cosmetic container of any one of embodiments 1 to 13, wherein the recycled polyethylene terephthalate) (rPET) further comprises an inorganic compound, preferably in an amount of 0.10 % by mass or more, based on the total mass of the recycled polyethylene terephthalate) (rPET).

15. The melt-formed cosmetic container of embodiment 14, wherein the inorganic compound is a compound based on an element selected from the group consisting of Al, Sb, Cr, Fe, Cd, Ti, Ni, Ca and/or Mg.

16. The melt-formed cosmetic container of any one of embodiments 1 to 15, wherein the recycled polyethylene terephthalate) (rPET) further comprises an additive in an amount of 2.0 % by mass or less, based on the total mass of the recycled polyethylene terephthalate) (rPET) preferably in an amount of from 0.1 to 1 % by mass, 0.2 to 0.5 % by mass, or 0.25 to 0.3 % by mass.

17. The melt-formed cosmetic container of embodiments 16, wherein the additive is selected from the group consisting of polyvinyl chloride (PVC), polystyrene (PS), ethylene vinyl alcohol (EVOH), acrylonitrile butadiene styrene (ABS), polylactic acid (PLA) and/or polypropylene (PP).

18. The melt-formed cosmetic container of any one of embodiments 1 to 17, wherein the recycled polyethylene terephthalate) (rPET) further comprises a conjugated organic compound in an amount of 500 ppm by mass or less, based on the total mass of the recycled polyethylene terephthalate) (rPET) preferably in an amount of from 2 to 250 ppm by mass, or 3 to 100 ppm by mass.

19. The melt-formed cosmetic container of embodiment 18, wherein the conjugated organic compound is selected from the group consisting of quinone, benzophenone, benzoquinone, stilbene, and/or biphenyl.

20. The melt-formed cosmetic container of any one of embodiments 1 to 19, wherein the cosmetic container comprises a mascara container, a lipgloss container, an eyeliner container, a pipette container, a hair gel container, a hair cream container, a lip balm container, an eye serum container, a body cream container, a body lotion container, a body oil container, a face cream container, or a face cleanser container.

21. The melt-formed cosmetic container of any one of embodiments 1 to 20 for use as a storage article of a water-based content.

22. The melt-formed cosmetic container of any one of claims 1 to 21, wherein the cosmetic container contains a cosmetic mass.

23. A method for producing a melt-formed cosmetic container for retaining a water-based content comprising the steps:

a. Providing recycled polyethylene terephthalate) (rPET) having a micro-particle contamination lying in the range of from 1,500 to 63,000 particles per 10,000 images, PPTI;
b. Optionally mixing the rPET with at least one further kind of polymer, thereby providing an rPET-based mixture; and
c. Melt-forming the rPET or rPET-based mixture, thereby providing a cosmetic container according to any one of embodiments 1 to 22.

24. The method of embodiment 23, wherein the rPET comprises a PET dimer in a total amount of from about 50 to about 130 mg/kg, preferably about 75 to about 125 mg/kg, more preferably about 100 to about 120 mg/kg.

25. The method of embodiments 23 or 24, wherein the rPET comprises a PET trimer in a total amount of from about 1,000 to about 5,000 mg/kg, preferably about 2,000 to about 4,500 mg/kg, more preferably about 3,000 to about 4,000 mg/kg.

26. A melt-formed cosmetic container for retaining a water-based content obtained from the method of any one of embodiments 23 to 25.

**Claims**

1. A melt-formed cosmetic container for retaining a water-based content, the container comprising:
   a polymeric composition comprising a recycled polyethylene terephthalate) (rPET) having a micro-particle contamination lying in the range of from 1,500 to 63,000 particles per 10,000 images, PPTI.

2. The melt-formed cosmetic container of claim 1 for further retaining an organic solvent-based content and/or an oil-based content.

3. The melt-formed cosmetic container of claim 1 or 2, wherein the polymeric composition comprises an amount of recycled polyethylene terephthalate) (rPET) of 15 % by mass or more, based on the total mass of the polymeric composition, preferably of 30 % by mass or more, of 50 % by mass or more, of 70 % by mass or more, of 85 % by mass or more, or of 100 % by mass.

4. The melt-formed cosmetic container of any one of claims 1 to 3, wherein the polymeric composition further comprises at least one further kind of polymer, such as a polyester comprising PET and/or a copolyester comprising PCTG, PCTA, PETG, and/or PCT,
   preferably wherein the polymeric composition comprises the at least one further kind of polymer in an amount of 85 % by mass or less, based on the total mass of the polymeric composition, preferably of 70 % by mass or less, of 50 % by mass or less, of 30 % by mass or less, of 15 % by mass or less, or of 0% by mass.

5. The melt-formed cosmetic container of any one of claims 1 to 4, wherein the polymeric composition does not comprise a substantial amount of a fluorinated and/or perfluorinated polymer.

6. The melt-formed cosmetic container of any one of claims 1 to 5, wherein at a temperature of about 45 °C and a pressure of about 1 atm, when

   $w(WBC)$ at $t_0$ is defined as a weight of water of the water-based content
   w(WBC) in the cosmetic container at a first point of time $t_0$,
   $w(WBC)$ at $t_{0+x}$ is defined as a weight of water of the water-based content
   w(WBC) in the cosmetic container at a second point of time $t_{0+x}$ subsequent to $t_0$, and
   a weight loss of the water-based content according to formula (1.1) is 5.00 % or less, said formula (1.1) being

   $$\left[1 - \frac{w(WBC) \, at \, t_{0+x}}{w(WBC) \, at \, t_0}\right] x \, 100 = \; Weight \; loss \; (\%),$$

   preferably wherein the formula (1) is 3.15 % or less, 3.10 % or less, 3.05 % or less, 2.50 % or less, 2.00 % or less, 1.80 % or less, or 1.50 % or less, and/or
   preferably wherein $t_{0+x}$ is four (4) weeks or more, preferably six (6) weeks or more.

7. The melt-formed cosmetic container of any one of claims 1 to 6, wherein the micro-particle contamination of recycled polyethylene terephthalate) (rPET) lies in the range of from 1,500 to 20,000 particles per 10,000 images, PPTI, preferably of from 3,000 to 15,000 particles per 10,000 images, PPTI, and more preferably of from 5,000 to 12,000 particles per 10,000 images, PPTI.

8. The melt-formed cosmetic container of any one of claims 1 to 7, wherein the recycled polyethylene terephthalate) (rPET) comprises 50 to 95 % of micro-particles having a size of 3 $\mu$m or less, based on a total amount of micro-particles in the recycled polyethylene terephthalate) (rPET) preferably 60 to 90 %, and more preferably 70 to 85 %, and/or wherein the recycled polyethylene terephthalate) (rPET) comprises 70 to 100 % of micro-particles having a size of 5 $\mu$m or less, based on a total amount of micro-particles in the recycled polyethylene terephthalate) (rPET) preferably 80 to 99 %, and more preferably 90 to 99 %.

9. The melt-formed cosmetic container of any one of claims 1 to 8, wherein the recycled poly(ethylene terephthalate) (rPET) further comprises an inorganic compound, preferably in an amount of 0.10 % by mass or more, based on the total mass of the recycled poly(ethylene terephthalate) (rPET),
preferably wherein the inorganic compound is a compound based on an element selected from the group consisting of Al, Sb, Cr, Fe, Cd, Ti, Ni, Ca and/or Mg.

10. The melt-formed cosmetic container of any one of claims 1 to 9, wherein the recycled polyethylene terephthalate) (rPET) further comprises an additive in an amount of 2.0 % by mass or less, based on the total mass of the recycled polyethylene terephthalate) (rPET) preferably in an amount of from 0.1 to 1 % by mass, 0.2 to 0.5 % by mass, or 0.25 to 0.3 % by mass,
preferably wherein the additive is selected from the group consisting of polyvinyl chloride (PVC), polystyrene (PS), ethylene vinyl alcohol (EVOH), acrylonitrile butadiene styrene (ABS), polylactic acid (PLA) and/or polypropylene (PP).

11. The melt-formed cosmetic container of any one of claims 1 to 10, wherein the recycled polyethylene terephthalate) (rPET) further comprises a conjugated organic compound in an amount of 500 ppm by mass or less, based on the total mass of the recycled polyethylene terephthalate) (rPET) preferably in an amount of from 2 to 250 ppm by mass, or 3 to 100 ppm by mass,
preferably wherein the conjugated organic compound is selected from the group consisting of quinone, benzophenone, benzoquinone, stilbene, and/or biphenyl.

12. The melt-formed cosmetic container of any one of claims 1 to 11, wherein the cosmetic container comprises a mascara container, a lipgloss container, an eyeliner container, a pipette container, a hair gel container, a hair cream container, a lip balm container, an eye serum container, a body cream container, a body lotion container, a body oil container, a face cream container, or a face cleanser container.

13. The melt-formed cosmetic container of any one of claims 1 to 12 for use as a storage article of a water-based content.

14. The melt-formed cosmetic container of any one of claims 1 to 13, wherein the cosmetic container contains a cosmetic mass.

15. A method for producing a melt-formed cosmetic container for retaining a water-based content comprising the steps:

a. Providing recycled polyethylene terephthalate) (rPET) having a micro-particle contamination lying in the range of from 1,500 to 63,000 particles per 10,000 images, PPTI;
b. Optionally mixing the rPET with at least one further kind of polymer, thereby providing an rPET-based mixture; and
c. Melt-forming the rPET or rPET-based mixture, thereby providing a cosmetic container according to any one of claims 1 to 14,

preferably wherein the rPET comprises a PET dimer in a total amount of from about 50 to about 130 mg/kg, preferably about 75 to about 125 mg/kg, more preferably about 100 to about 120 mg/kg, and/or
preferably wherein the rPET comprises a PET trimer in a total amount of from about 1,000 to about 5,000 mg/kg, preferably about 2,000 to about 4,500 mg/kg, more preferably about 3,000 to about 4,000 mg/kg.

16. A melt-formed cosmetic container for retaining a water-based content obtained from the method of claim 15.

**EUROPEAN SEARCH REPORT**

Application Number

EP 23 20 6386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | THODEN VAN VELZEN E U ET AL: "Technical quality of rPET. Technical quality of rPET that can be obtained from Dutch PET bottles that have been collected, sorted and mechanically recycled in different manners", INTERNET CITATION, 1 July 2016 (2016-07-01), pages 1-64, XP002780677, ISBN: 978-94-6257-723-7 Retrieved from the Internet: URL:https://www.researchgate.net/publicati on/308631961_Technical_quality_of_rPET_Tec hnical_quality_of_rPET_that_can_be_obtaine d_from_Dutch_PET_bottles_that_have_been_co llected_sorted_and_mechanically_recycled_i n_different_manners [retrieved on 2018-04-30] * page 57 – page 57 * | 1-16 | INV. C08L67/02 |
| X | US 2022/227993 A1 (TREECE MARK ALLAN [US] ET AL) 21 July 2022 (2022-07-21) | 1,3,5,7, 8,13,15 | TECHNICAL FIELDS SEARCHED (IPC) |
| Y | * paragraphs [0261], [0279] – paragraphs [0261], [0281]; claims 20,1,19; example 1; table 2 * | 1-16 | C08L A61Q C09J |

The present search report has been drawn up for all claims

| Place of search | Date of completion of the search | Examiner |
|---|---|---|
| The Hague | 12 March 2024 | Adigbli, Francis |

EPO FORM 1503 03.82 (P04C01)

## ANNEX TO THE EUROPEAN SEARCH REPORT
## ON EUROPEAN PATENT APPLICATION NO.

**EP 23 20 6386**

This annex lists the patent family members relating to the patent documents cited in the above-mentioned European search report.
The members are as contained in the European Patent Office EDP file on
The European Patent Office is in no way liable for these particulars which are merely given for the purpose of information.

**12-03-2024**

| Patent document cited in search report | Publication date | Patent family member(s) | Publication date |
|---|---|---|---|
| US 2022227993 A1 | 21-07-2022 | CN 113795367 A | 14-12-2021 |
| | | EP 3966016 A1 | 16-03-2022 |
| | | KR 20220006608 A | 17-01-2022 |
| | | US 2022227993 A1 | 21-07-2022 |
| | | WO 2020231781 A1 | 19-11-2020 |

EPO FORM P0459

For more details about this annex : see Official Journal of the European Patent Office, No. 12/82